# EUROPÄISCHE PATENTSCHRIFT

(11) **EP 0 534 315 B1**
(45) Veröffentlichungstag und Bekanntmachung des Hinweises auf die Patenterteilung: **10.05.1995**
(21) Anmeldenummer: 92115913.3
(22) Anmeldetag: 17.09.1992
(51) Int. Cl.: B60R 13/10

(54) **Fixiervorrichtung für Kennzeichenschilder innerhalb eines Kennzeichenverstärkers**
Attachment device for a number plate inside its stiffening holder
Dispositif de fixation d'une plaque d'immatriculation à l'intérieur de son support de renforcement

(30) Priorität: 27.09.1991 DE 4132267
(43) Veröffentlichungstag der Anmeldung: 31.03.1993
(73) Patentinhaber: Peuker, Tino, D-08459 Neukirchen (DE); Peuker, Gustav, D-08459 Neukirchen (DE)
(72) Erfinder: Peuker, Tino, D-08459 Neukirchen (DE); Peuker, Gustav, D-08459 Neukirchen (DE)
(74) Vertreter: Auerbach, Bettina

(56) Entgegenhaltungen:
- DE-A- 2 306 782
- DE-U- 8 912 546
- DE-U- 9 015 713
- DE-U- 9 106 115

## Beschreibung

Die Erfindung betrifft eine Fixiervorrichtung für Kennzeichenschilder in Kennzeichenverstärkern, wobei der Kennzeichenverstärker einen an der Grundplatte umlaufenden u-förmigen Rand aufweist, welcher an einer seiner Längsseiten breiter als der übrige Rand und abnehmbar gestaltet ist, um damit einerseits als Werbeleiste zu dienen und andererseits die darunterliegende Fixiervorrichtung abzudecken und zu arretieren.

Vorrichtungen ähnlicher Art sind bereits bekannt. Zum Beispiel wird in der DE-C-3 613 865 eine Halterungsvorrichtung zur Aufnahme von ebenen Schildern beschrieben, bei welcher der Rahmen zweiteilig ausgebildet ist. Der erste Teil des Schildhalters umfaßt eine dreiseitig mit Randbereich versehene Grundplatte und der zweite Teil eine an diese Grundplatte ansetzbare Fixierleiste, die den vierten Randbereich bildet, wobei der Schlitz zur Aufnahme der Kante des Schildes im mittleren Randbereich der Grundplatte, der Fixierleiste gegenüberliegend, ausgebildet ist. Die Fixierleiste weist einen Arretiersteg zum Übergreifen des Kantenbereichs der Grundplatte auf, um eine formschlüssig verriegelte und schwer lösbare Verbindung zu erreichen.
Diese Haltevorrichtung hat zwar den Vorteil, daß eine einfache Montage des Schildes in die Haltevorrichtung hinein auch bei ungünstigen Raumverhältnissen am Fahrzeug möglich ist, doch eine sichere und stabile Halterung nur bei den Schildern zustande kommt, die bezüglich ihrer Höhe mit dem Maß, welches zwischen Oberkannte des Randschlitzes und Oberkannte des Anschlagnoppens festgelegt ist, übereinstimmen. Ein Ausgleich von auftretenden Maßtoleranzen der Schildhöhe bei verschiedenen Schildtypen kann nicht erfolgen.

Eine Vorrichtung, welche diese Nachteile zu beseitigen versucht, wird im DE-U-90 15 713.3 beschrieben. Hier ist der Rand ununterbrochen umlaufend um die Grundplatte des Kennzeichenverstärkers ausgebildet und an einer seiner Längsseiten ebenfalls breiter ausgebildet als der übrige Rand, um einerseits als Werbeleiste zu dienen und andererseits Raum für Einsteckkanäle zu bieten. Nach Einlegen des Tafelelements in den Kennzeichenverstärker werden Stützeinsätze in die dazu an der Unterkante des Kennzeichenverstärkers vorgesehenen Einsteckkanäle eingeschoben. Da die Stützelemente im vorderen Endbereich vorteilhaft federnd ausgebildet sind, ist ein spielfreies Einspannen des Tafelelements auch bei auftretenden Maßtoleranzen im Bereich der Tafelelementhöhen möglich.
Damit kann diese Vorrichtung zwar in gewisser Weise Maßtoleranzen von Kennzeichenschildhöhen ausgleichen, doch nur im geringen durch die Elastizität des Werkstoffes und durch die Raumverhältnisse innerhalb der Einsteckkanäle bestimmten Maßbereich. Sie hat weiterhin den Nachteil, daß für das Einbringen der Stützelemente in die an der Unterkante des Kennzeichenverstärkers angeordneten Einsteckkanäle ein gewisser zumindest der Höhe der Stützelemente entsprechender Platzbedarf unterhalb des Kennzeichenverstärkers gegeben ist, der jedoch bei vielen neuen Fahrzeugtypen auf Grund von eingearbeiteten Kennzeichenmulden nicht vorhanden ist. Damit wird die Anwendbarkeit dieser Aufnahmevorrichtung in der Praxis eingeschränkt.

Der Erfindung liegt deshalb die Aufgabe zugrunde, eine Fixiervorrichtung der eingangs erwähnten Art zu schaffen, die die aufgeführten Nachteile des Standes der Technik beseitigt. Trotz gegebener extrem geringer Bewegungsfreiheit an bestimmten Fahrzeugtypen soll auch dort eine schnelle und einfache Montage des Kennzeichenschildes in den Kennzeichenverstärker ermöglicht werden. Eine weitere Aufgabe der Erfindung ist es, Maßtoleranzen so auszugleichen, daß Kennzeichenschilder mit definitiv unterschiedlichen Schildhöhen stabil fixiert werden können, ohne eine andere Kennzeichenverstärkung benutzen zu müssen, und dennoch ein geräuscharmes und sicheres Festhalten des Kennzeichenschildes im Kennzeichenverstärker gewährleistet wird.

Die Aufgabe wird erfindungsgemäß dadurch gelöst, daß ein aus einer Grundplatte mit einem das Kennzeichenschild an seinem äußeren Randbereich umgreifenden umlaufenden u-förmigen Rand bestehender Kennzeichenverstärker so ausgebildet ist, daß wenigstens eine Längsseite des umlaufenden u-förmigen Randes breiter als der übrige Rand sowie abnehmbar gestaltet ist und als Abdeckleiste für Werbezwecke eine darunter liegende Fixiervorrichtung abdeckt und gleichzeitig arretiert gemäß dem kennzeichenenden Teil des Anspruchs 1.
Die wenigstens zwei vorhandenen Fixiervorrichtungen selbst sind als Schließvorrichtung, bestehend aus Schließlöchern besonderer Form mit darin einbringbar gestalteten Fixierschlüsseln, ausgebildet.
Die Fixierschlüssel, welche vorzugsweise an der Grundplatte abknickbar befestigt sind, um einen Verlust beim Transport zu verhindern, weisen einen flachen, ovalen Schlüsselkopf mit daran anschließenden, einen Schlüsselbart aufweisenden Schlüsselschaft auf. Die Anordnung des Schlüsselschaftes am Schlüsselkopf ist vorzugsweise an einer seiner flachen Seiten und dort vorzugsweise exzentrisch festgelegt. Die Achsen der ovalen Schlüsselkopfscheibe weisen unterschiedliche Abmessugen auf, wobei die exzentrische Anordnung des Schlüsselschaftes am Schlüsselkopf vorzugsweise nur an einer seiner Achsen vorgenommen wird. Das Maß des Abstandes vom Mittelpunkt der Scheibe wird vorzugsweise bestimmt durch die Maßtoleranz der Schildhöhen der beiden am häufigsten verwendeten Schildtypen.
Unter dem abnehmbaren Randteil, der Abdeckleiste, sind wenigstens zwei Ausnehmungen angeordnet, welche jeweils ein Schließloch zur Aufnahme des Fixierschlüssels aufweisen. Die Schließlöcher gleichen der Form des Endquerschnitts des Schlüsselschaftes, welcher einerseits durch die Form des Schlüsselschaftes und andererseits durch den an diesem angeordneten Schlüsselbart gekennzeichnet ist. Um das Einbringen des Fixierschlüssels zu erleichtern, sind die Schließlochmaße mit einer zusätzlichen Toleranz ausgebildet.
Der Schlüsselschaft weist ein prismatisches Profil auf, wobei an seinem Ende ein oder mehrere, vorzugsweise jedoch zwei sich gegenüberliegende Schlüsselbärte, in Form von am Schlüsselschaft angeordneten Scheibensegmenten angeordnet sind.
Die am Kennzeichenverstärker mittels abknickbar gestalteter Verbindungsstege befestigte Abdeckleiste weist zur Arretierung der Fixierschlüssel in seiner Fixierstellung Arretierstege auf, welche beim Abdecken der Fixiervorrichtung mittels Abdeckleiste an den Schlüsselkopf des Fixierschlüssels so angreifen, daß ein selbsttätiges Zurückdrehen des Fixierschlüssels, zum Beispiel bei extremen Erschütterungen am Fahrzeug, verhindert wird.

Die weitere vorteilhafte Ausgestaltung der Erfindung soll nachstehend an einem Ausführungsbeispiel näher erläutert werden.
Dabei zeigen
- Fig. 1: die schematische Draufsicht auf den Kennzeichenverstärker mit abknickbar befestigter Abdeckleiste,
- Fig. 2: die schematische Draufsicht des Fixierschlüssels,
- Fig. 3: die schematische Seitenansicht des Fixierschlüssels,
- Fig. 4: den schematischen Endquerschnitt des Fixierschlüssels.

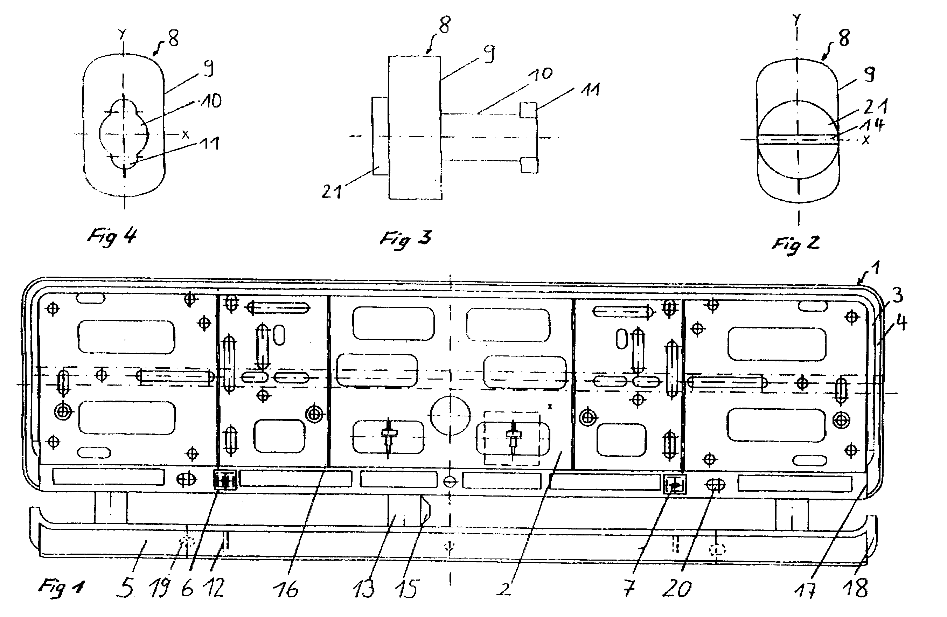

Wie aus Figur 1 ersichtlich ist, besteht der Kennzeichenverstärker 1 aus einer Grundplatte 2 mit einem umlaufenden u-förmigen Rand 3, bei dem eine der beiden Längsseiten breiter als der übrige Rand ausgebildet und abnehmbar gestaltet ist. Dieser Randabschnitt wird nachfolgend als Abdeckleiste 5 bezeichnet.
Im unbenutzten Zustand des Kennzeichenverstärkers ist die Abdeckleiste 5 mittels Verbindungsstegen 13 am übrigen Kennzeichenverstärker 1 befestigt und kann aufgrund der abknickbar gestalteten Verbindungsstege 13 vor dem Anbringen des Kennzeichenverstärkers 1 an das Fahrzeug durch ein leichtes Abknicken entfernt werden. Dabei weist wenigstens ein Verbindungssteg 13 an einem seiner freien Randbereiche eine zum Verdrehen der Fixierschlüssel 8 paßfähige Steckform auf.
Auch die an der Grundplatte 2 abknickbar befestigten Fixierschlüssel 8 können vor dem Befestigen des Kennzeichenverstärkers am Fahrzeug durch ein leichtes Abknicken derselben entfernt werden.
Diese Verfahrensweise des Anbringens der Zubehörteile an den Kennzeichenverstärker 1 hat sowohl verkaufstechnische als auch handhabungsseitige Vorteile.
Zum Befestigen des Kennzeichenverstärkers 1 am Fahrzeug mittels Schraubverbindung weist die Grundplatte 2 bekannter weise fahrzeugtypische Befestigungsdurchbrüche auf. Vertikalstege 16 auf der Grundplatte 2 dienen einerseits dem Gewinnen eines Raumes zwischen Grundplatte 2 und Kennzeichenschild zur Aufnahme der Schraubenkopfe der Befestigungsschrauben für den Kennzeichenverstärker 1 am Fahrzeug und drücken andererseits das Kennzeichenschild im eingelegten Zustand gegen den an drei Seiten das Kennzeichenschild umgreifenden Rand des Kennzeichenverstärkers 1, um ein vorläufiges Festhalten des Kennzeichenschildes im Kennzeichenverstärker 1 zu erreichen. Der nunmehr überstehende Teil der Grundplatte 2, welcher später durch die Abdeckleiste 5 abgedeckt wird, weist wenigstens zwei Ausnehmungen 6 auf, in denen jeweils eine Fixiervorrichtung angeordnet ist. Diese Fixiervorrichtungen sind im Prinzip wie Schließvorrichtungen aufgebaut. Sie sind gekennzeichnet durch ein in der Ausnehmung 6 befindliches Schließloch 7, in welches ein Fixierschlüssel 8 eingebracht ist und in ihm verdreht werden kann.

Der Fixierschlüssel 8 ist wiederum gekennzeichnet durch einen Schlüsselkopf 9 mit sich daran anschließendem einen Schlüsselbart 11 aufweisenden Schlüsselschaft 10.
Die Form der Ausnehmungen 6 der Grundplatte 2 ist im Ausführungsbeispiel, wie aus Fig.1 ersichtlich, quadratisch und dient der Aufnahme des Schlüsselkopfes 9, wobei ein Verdrehen desselben ungehindert möglich sein muß.
Die Form der Schließlöcher 7 entspricht dem aus Fig. 4 ersichtlichen Endquerschnitt des Schlüsselschaftes 10 mit daran befindlichem Schlüsselbart 11. Um das Einführen und Verdrehen der Fixierschlüssel 8 ungehindert zu ermöglichen, weist die Größe der Schließlöcher gegenüber der Größe des Endquerschnitts des Schlüsselschaftes 10 eine zusätzliche Toleranz auf.
Die vorzugsweise an der Grundplatte 2 abknickbar befestigten Fixierschlüssel 8 weisen, wie aus Fig. 2 bis 4 ersichtlich ist, einen flachen, ovalen Schlüsselkopf 9 auf. Auf seiner oberen flachen Seite weist der Schlüsselkopf 9 eine weitere kreisförmige Scheibe 21 auf, deren Durchmesser identisch ist mit dem Abstand der parallel zueinander verlaufenden Seitenflächen des Schlüsselkopfes 9. Diese Maßbestimmung ist jedoch nicht zwingend für die Funktionalität der Fixiervorrichtung. Wichtig ist, daß die kreisförmige Scheibe 21 einen Arretierschlitz 14 aufweist, welcher mit der Steckform 15 des Verbindungssteges 13 paßfähig ist.
Ein einfaches Verdrehen der Fixierschlüssel 8 ist demzufolge dadurch gegeben, daß die Steckform 15 des Verbindungssteges 13 in den Arretierschlitz 14 gesteckt wird und an dem als Griff zu benutzenden Verbindungssteg 13 gedreht wird, bis ein Fixieren des Kennzeichenschildes erreicht wird.
An der unteren flachen Seite des Schlüsselkopfes 9 ist, wie aus Fig. 3 und 4 ersichtlich, der zylindrich geformte Schlüsselschaft 10 auf der Längsachse des Schlüsselkopfes 9 exzentrisch zum Mittelpunkt der ovalen Schlüsselkopfscheibe angeordnet, wobei die Differenz der dadurch gegebenen Längsachs-Abschnitte der Höhenmaßdifferenz der beiden am häufigsten verwendeten Kennzeichenschilder entspricht. Dreht man also den Fixierschlüssel 8 so, daß der längere Längsachs-Abschnitt des Schlüsselkopfes 9 zum Kennzeichenschild gedreht wird, dann kann das kleinere der beiden am häufigsten verwendeten Kennzeichenschilder fixiert werden. Dreht man den kürzeren Längsachs-Abschnitt zum Kennzeichenschild , kann demzufolge das größere Kennzeichenschild fixiert werden.
Aus Figur 3 und 4 ist weiterhin ersichtlich, daß der Schlüsselschaft 10 zwei sich gegenüber liegende Schlüsselbärte 11 in Form von am Schlüsselschaftende angeordneten Scheibensegmenten besitzt.
Da die Schließlöcher 7 dem Endquerschnitt des Schlüsselschaftes 10 mit daran angeordneten Schlüsselbärten 11 entsprechen, ist deren Anordnung innerhalb der Ausnehmungen 6 so gewählt, daß das Längsmaß des Schließloches 7 quer zur Feststellrichtung des Kennzeichenschildes liegt und beim Fixieren des Kennzeichenschildes ein Verriegeln der Schlüsselbärte 11 im Schließloch 7 erfolgt.
Der sich nun in Fixierstellung befindende Fixierschlüssel 8 wird durch die an der Abdeckleiste 5 angeordneten Arretierstege 12 beim Anbringen der Abdeckleiste 5 arretiert, so daß auch bei größeren Erschütterungen am Fahrzeug ein Verdrehen der Fixierschlüssel 8 ausgeschlossen wird.
Für das Anbringen der Abdeckleiste 5 an den Kennzeichenverstärker 1 weist der umlaufende u-förmige Rand 3 an den Anschlußstellen zur Abdeckleiste 5 Einführschlitze 17 auf, in welche die analog zu den Anschlußstellen des umlaufenden u-förmigen Randes 3 ausgebildeten Überstände 18 der Abdeckleiste 5 eingeschoben werden können, so daß formschlüssige Verbindungen an den Anschlußstellen des umlaufenden u-förmigen Randes 3 zur Abdeckleiste 5 entstehen und der umlaufende u-förmige Rand 3 durch die Abdeckleiste ergänzt wird.
Um einen festen Verschluß zwischen Abdeckleiste 5 und Grundplatte 2 zu erhalten, weist die Abdeckleiste 5 an ihrer Innenseite druckknopfartige Verdickungen 19 auf, mit deren Hilfe sie durch Eindrücken dieser in die dazu an der Grundplatte 2 eingearbeiteten Rastlöcher 20 an der Grundplatte 2 befestigt wird.

## Patentansprüche

1. Fixiervorrichtung für Kennzeichenschilder innerhalb eines Kennzeichenverstärkers (1) aus Kunststoff, bestehend aus einer Grundplatte (2) mit fahrzeugtypischen Befestigungsdurchbrüchen und einem das Kennzeichenschild an seinem äußeren Randbereich umgreifenden umlaufenden u-förmigen Rand (3) mit tieferliegender Sicke (4), wobei dieser umlaufende u-förmige Rand (3) an einer seiner Längsseiten breiter als der übrige Randbereich und als abnehmbare Abdeckleiste ausgebildet ist, die wenigstens zwei darunter liegende Fixiervorrichtungen abdeckt, dadurch **gekennzeichnet,** daß die Grundplatte (2) eigens für die Fixiervorrichtungen vorgesehene Ausnehmungen (6) mit jeweils einem Schließloch (7) aufweist, in welches an der Grundplatte (2) abknickbar befestigte Fixierschlüssel (8) mit einem flachen, ovalen Schlüsselkopf (9) und einem an einer flachen Seite des Schlüsselkopfes (9) exzentrisch angeordneten, an seinem Ende einen oder mehrere Schlüsselbärte (11) aufweisenden Schlüsselschaft (10), einführ- und verdrehbar sind, wobei die Abdeckleiste (5) an ihrer Innenseite zum Fixierschlüsselkopf (9) paßfähige Arretierstege (12) zum Arretieren des Fixierschlüssels (8) aufweist.

2. Fixiervorrichtung nach Anspruch 1, dadurch **gekennzeichnet,** daß der Schlüsselschaft (10) ein prismatisches Profil aufweist und an seinem Ende einen oder mehrere, vorzugsweise zwei sich gegenüberliegende, Schlüsselbärte (11) in Form von Scheibensegmenten besitzt.

3. Fixiervorrichtung nach Anspruch 1 oder 2, dadurch **gekennzeichnet,** daß die Exzentrizität des Ortes, an dem der Schlüsselschaft (10) am Schlüsselkopf (9) angeordnet ist, nur auf der Längsachse des Schlüsselkopfes (9) besteht und so gewählt ist, daß die Differenz der dadurch gegebenen Längsachsen- Abschnitte der Differenz der beiden am häufigsten verwendeten Kennzeichenschildhöhen entspricht.

4. Fixiervorrichtung nach einem der Ansprüche 1 bis 3, dadurch **gekennzeichnet,** daß die Abdeckleiste (5) am Kennzeichenverstärker (1) mittels abknickbar gestalteter Verbindungsstege (13) befestigt ist, wobei wenigstens ein Verbindungssteg (13) an einer seiner freien Randbereiche eine für den am Fixierschlüssel (8) angeordneten Arretierschlitz (14) paßfähige Steckform (15) aufweist.

## Claims

1. A fastening device for license plates mounted inside a license plate frame (1) made of plastic, which consists of a base plate (2) with openings for mounting purposes which are typical to vehicles and a continuous U-shaped edge piece (3) surrounding the outer edge of the license plate with a lower-lying groove (4), whereby one of the longitudinal sides of this continuous U-shaped edge piece (3) is wider than the rest of its edge and is constructed as a removable cover strip which covers at least two fastening devices located below it **characterized** in that the base plate (2) is provided with recesses (6) which are designed especially for the fastening device, these recesses (6) are provided with one locking hole (7) each into which a fastening key (8), which is attached to the base plate (2) in such a way that it can be bent and which is provided with a flat, oval key head (9) and a key shaft (10) which is excentrally located on the flat side of the key head (9), and the end of which is provided with one or more key bits (11), can be inserted and turned, whereby the inner side of the cover strip (5) is provided with locking pieces (12) which correspond to the fastening key head (9) for locking the fastening key (8).

2. A fastening device as claimed in Claim 1 **characterized** in that the key shaft (10) is provided with a prismatic profile and one or more, preferably two, opposing key bits (11) in the form of disk sections on its end.

3. A fastening device as claimed in any of claims 1 or 2 **characterized** in that the key shaft (10) is excentrally located on the longitudinal axis of the key head (9) only and that this location was chosen in such a way that the resulting difference between the longitudinal axis sections corresponds to the difference in the heights of the two most commonly used license plates.

4. A fastening device as claimed in any of the claims from 1 to 3 **characterized** in that the cover strip (5) on the license plate frame (1) is mounted by means of connection pieces (13) which can be snapped off, whereby at least one connection piece (13) is provided with a plug-type part (15) on one of its free edge pieces and this part (15) corresponds to the slit (14) located on the fastening key (8).

## Revendications

1. Dispositif de fixation pour plaques d'immatriculation à l'intérieur d'un renforcement de plaque d'immatriculation (1) en plastique comprenant une plaque de fond (2) avec des traversées de fixation typiques pour chaque véhicule et un bord circonférentiel en U(3) contournant la bordure extérieure de la plaque d'immatriculation avec une cavité plus profonde (4), ce bord circonférentiel en U (3) étant, sur l'un de ses côtés longitudinaux, plus large que le reste du bord, et amovible en cet endroit, et recouvrant deux dispositifs de fixation sousjacents,
**caractérisé** en ce que la plaque de fond (2) est pourvue de cavités (6) prévues spécialement pour les dispositifs de fixation, avec chaque fois un trou de serrage (7), dans lequel peuvent être introduites et tournées des clés de fixation (8) montées de façon pliable sur la plaque de fond (2) et dotées d'une tête de clé plate et ovale (9) ainsi que d'une tige de clé (10) agencée de façon excentrique sur le côté plat de la tête de clé (9) et pourvue, sur son extrémité, d'un ou de plusieurs pannetons (11), la barre de recouvrement (5) étant dotée, sur son côté intérieur vers la tête de la clé de fixation (9) de nervures d'arrêt (12) adaptables pour bloquer la clé de fixation (8).

2. Dispositif de fixation selon revendication 1
**caractérisé** en ce que la tige de clé (10) a un profil prismatique et possède, sur son extrémité, un ou plusieurs pannetons (11), de préférence opposés l'un à l'autre, ayant la forme de segments de disque.

3. Dispositif de fixation selon revendication 1 ou 2
**caractérisé** en ce que l'excentricité de l'endroit où la tige de clé (10) est agencée sur la tête de clé (9) n'existe que sur l'axe longitudinal de la tête de clé (9) et est choisi de sorte que la différence des sections d'axe longitudinale ainsi obtenues corresponde à la différence en hauteur des deux plaques d'immatriculation les plus fréquemment utilisées.

4. Dispositif de fixation selon l'une des revendications 1 à 3
**caractérisé** en ce que la barre de recouvrement (5) est fixée sur le renforcement de plaque d'immatriculation (1) au moyen de nervures de raccordement (13) pliables, une des nervures (13) au moins présentant, sur l'une de ses bordures libres, une forme insérable (15) adaptée à la fente d'arrêt (14) agencée sur la clé de fixation (8).
